# EUROPEAN PATENT SPECIFICATION

(11) **EP 0 691 186 B1**
(45) Date of publication and mention of the grant of the patent: **29.04.1998**
(21) Application number: 95110425.6
(22) Date of filing: 04.07.1995
(51) Int. Cl.: B25J 9/04, E02F 3/42, B25J 9/10

(54) **Two-joint arm mechanism equipped with bi-articular driving means, and method for drive controlling each of driving means**
Zwei-Gelenkiger Armmechanismus mit Zwei-Richtung-Antrieb und Verfahren zur Steuerung jeden Antriebs
Mécanisme de bras à deux joints avec entraitement dans deux sens et méthode pour le contrôle des moyens d'entraîtement

(30) Priority: 04.07.1994 JP 173148/94; 07.04.1995 JP 107165/95
(43) Date of publication of application: 10.01.1996
(73) Proprietor: VERITAS CORPORATION, Tokyo (JP)
(72) Inventor: Kumamoto, Minayori, Shiga (JP)
(74) Representative: Zinnecker, Armin, Dipl.-Ing.

(56) References cited:
- DE-A- 2 949 974
- FR-A- 2 383 758
- US-A- 4 103 791
- US-A- 4 534 694

## Description

### BACKGROUND OF THE INVENTION

### Field of the Invention

The present invention relates to a two-joint arm mechanism which is preferably applied to a robot, a manipulator, an arm of a power shovel or the like which requires stiffness control of its loading point in operation of positioning various types of load by moving the load in a forward-backward direction, a upward-downward direction, and/or a diagonal direction with the load lifted and supported thereby, and a method for drive-controlling the two-joint arm mechanism, that is a method for drive-controlling each of the driving means.

### Description of the Prior Art

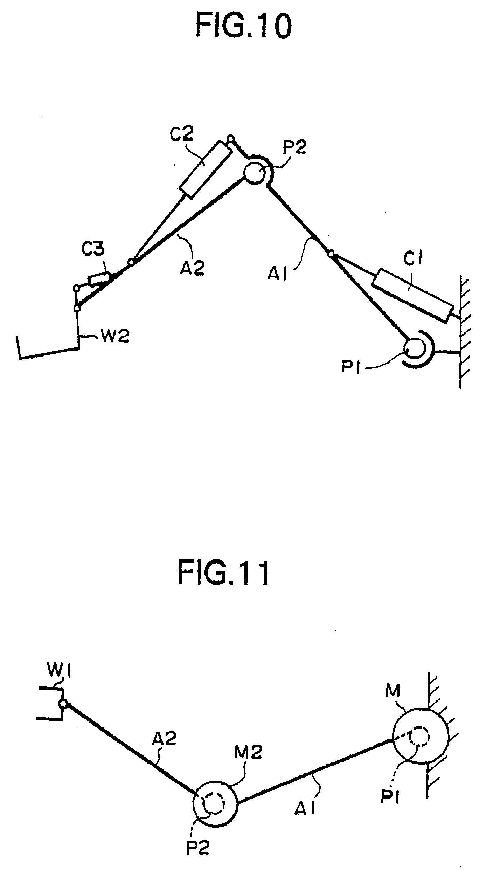

Heretofore, in the field of a robot, a manipulator, an arm of a power shovel or the like, various types of those employing a two-joint arm mechanism have been proposed. For example, as schematically shown in Figs. 10 and 11, there have been proposed those each comprising a first arm A1 pivoted at its rear end on a pivot pin P1, a second arm pivoted at its rear end on a pivot pin P2 at the forward end of the first arm A1, and a loading member for a load such as a grip or a bucket, wherein the first arm A1 and the second arm A2 are rotatable in either direction on the pivot pin P1 and P2, respectively. In this connection, the directions of the pivot pins are horizontal or vertical. Accordingly, the arm mechanism is changed in its posture within a vertical plane or horizontal plane depending upon the directions of the pivot pins.

The one illustrated in Fig.11 is of such a type that as driving means for rotating the two arms A1 and A2 in either direction on the respective pivot pins P1 and P2, motors M1 and M2 are mounted respectively on the pivot pins P1 and P2, and by selectively transmitting rotational forces in clockwise and counterclockwise directions caused by the motors M1 and M2 to the respective arms A1 and A2, the arms A1 and A2 are rotated in intended directions to enable the position of the loading member W1 to be changed freely.

The one illustrated in Fig.10 is of such a type that extensible actuators C1 and C2 such as hydraulic cylinders are span-wise attached to the respective two arms A1 and A2, and by the extensional-retractive motions of the actuators C1 and C2, the arms A1 and A2 are rotated on the pivot pins P1 and P2, respectively, to enable the loading member W2 such as a bucket at the distal endpoint to carry out operation such as excavation. Incidentally, C3 is an actuator for controlling posture of the loading member W2.

In the known two-joint arm mechanisms as described above, however, it is extremely difficult from theoretical viewpoint of control to independently control position, force and stiffness on the loading point at the forward end of the second arm A2 relative to the base B where the rear end of the first arm A1 is pivoted. Accordingly, as things stand now, approximate control is carried out.

In the known two-joint arm mechanism, such approximate control of position, force and stiffness on the loading point causes a problem in which it is difficult to carry out precise and rapid positioning control. Consequently, an existing robot, manipulator, or arm of a power shovel cannot preform rapid, precise and smooth motions as is natural in human extremities, but can demonstrate only clumsy motions.

It is, therefore, an object of the present invention to provide a two-joint arm mechanism equipped with a bi-articular driving means which is capable of controlling position, force and stiffness on a loading point of the forward end of a second arm independently, precisely and readily, and a method for drive-controlling all of driving means that is mono-articular driving mess as well as bi-articular driving means.

### SUMMARY OF THE INVENTION

The present invention has been made with a view to solving the above-mentioned problems.

According to the present invention, there is provided a two-joint arm mechanism equipped with a bi-articular driving means, the two-joint arm mechanism comprising:
a first arm pivoted at its rear end on a base as a foundation,
a second arm pivoted at its rear end on the forward end of the first arm, and
a loading member mounted on the forward end of the second arm,
   wherein two mono-articular driving means are respectively connected to the first arm and the second arm for independently exerting rotational forces on the respective arms in order to independently rotate the first arm and the second arm on pivot pins thereof to cause extension movement or flexion movement of the arm mechanism characterized in that, a single bi-articular driving means capable of acting simultaneously on both the arms is connectively mounted between the base and the second arm, and by simultaneously actuating these driving means, both the arms are rotated to move the loading point at the forward end of the second arm forward or backward relative to the base to effect positioning of the loading point at the forward end of the second arm.

According to another aspect of the present invention, there is provided a method for controlling a two-joint arm mechanism equipped with a bi-articular driving means as well as mono-articular driving means, the two-joint arm mechanism comprising:
a first arm-pivoted at its rear end on a base as a foundation,
a second arm pivoted at its rear end on the forward end of the first arm, and
a loading member mounted on the forward end of the second arm,
   wherein a first mono-articular driving means and a second mono-articular driving means are respectively connected to the first arm and the second arm for independently exerting driving forces for independently rotating the first arm and the second arm on pivot pins thereof, characterized in that a third bi-articular driving means capable of acting simultaneously on both the arms is connectively mounted between the base and the second arm, and by simultaneously actuating these driving means, both the arms are rotated to move the loading point at the forward end of the second arm forward or backward relative to the base to effect positioning of the loading point at the forward end of the second arm; the method comprising:
   dividing area of the movement of the loading point into direction A-D as a first direction on the line connecting the pivot pin at the rear end of the first arm and the forward end of the second arm, direction B-E as a second direction on the line passing along the second arm, and direction C-F as a third direction on the line passing through the loading point and in parallel with the first arm 1,
   controlling the first driving means in such a manner that when the loading point is moved forward or backward in the range included by direction B-E and direction C-F and containing the first direction, the first driving means is actuated at an output force of 100% in the direction of the movement, and when the loading point is moved forward or backward in the range included by direction B-E and direction C-F and without the first direction, the output force of the first driving means in the direction of the forward or backward movement of the loading point is gradually reduced to 0%, and sum of the guradually reduced output forces in the directions of the forward and backward movements is set to be 100%,
   controlling the second driving means in such a manner that when the loading point is moved forward or backward in the range included by direction A-D and direction C-F and containing the second direction, the second driving means is actuated at an output force of 100% in the direction of the movement, and when the loading point is moved forward or backward in the range included by direction A-D and direction C-F and without the second direction, the output force of the second driving means in the direction of the forward or backward movement of the loading point is gradually reduced to 0%, and sum of the guradually reduced output forces in the directions of the forward and backward movements is set to be 100%, and
   controlling the third driving means in such a manner that when the loading point is moved forward or backward in the range included by direction A-D and direction B-E and containing the third direction, the third driving means is actuated at an output force of 100% in the direction of the movement, and when the loading point is moved forward or backward in the range included by direction A-D and direction B-E and without the second direction, the output force of the third driving means in the direction of the forward or backward movement of the loading point is gradually reduced to 0%, and sum of the guradually reduced output forces in the directions of the forward and backward movements is set to be 100%.

### BRIEF DESCRIPTION OF THE DRAWINGS

Fig.1 is a side view of an embodiment of the arm mechanism according to the present invention.

Fig.2 is a side view of an embodiment in which the arm mechanism in Fig.1 is applied to a power shovel.

Fig.3 is a side view of a embodiment of the two-joint arm mechanism, to which the method for drive-controlling each of the driving means in the present invention.

Fig.4 is a radial diagrammatic view of output forces showing relationship between directions of movement of the loading point and patterns of output forces of the first driving means in the arm mechanism in Fig.3.

Fig.5 is a radial diagrammatic view of output forces showing relationship between directions of movement of the loading point and patterns of output forces of the second driving means in the arm mechanism in Fig.3.

Fig.6 is a radial diagrammatic view of output forces showing relationship between directions of movement of the loading point and patterns of output forces of the third driving means in the arm mechanism in Fig.3.

Fig.7 is a radial diagrammatic view of output forces showing relationship between directions of movement of the loading point and patterns of output forces of the first driving means in the arm mechanism in Fig.3 with its posture having been changed.

Fig.8 is a radial diagrammatic view of output forces showing relationship between directions of movement of the loading point and patterns of output forces of the second driving means in the arm mechanism in Fig.3 with its posture having been changed.

Fig.9 is a radial diagrammatic view of output forces showing relationship between directions of movement of the loading point and patterns of output forces of the third driving means in the arm mechanism in Fig.3 with its posture having been changed.

Fig.10 is a side view of an example of a known arm mechanism.

Fig.11 is a plan view of another example of a known arm mechanism.

### DESCRIPTION OF THE PREFERRED EMBODIMENTS

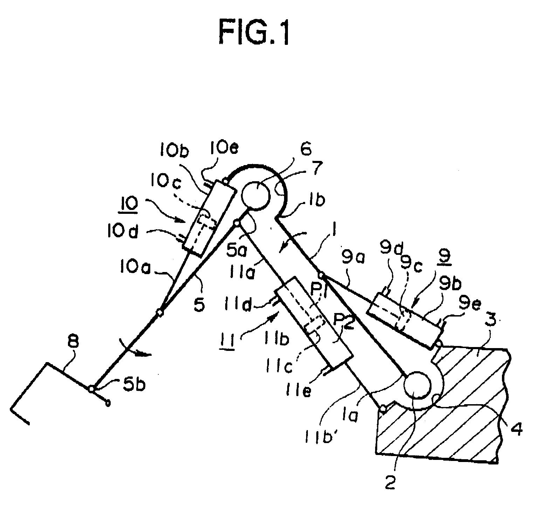

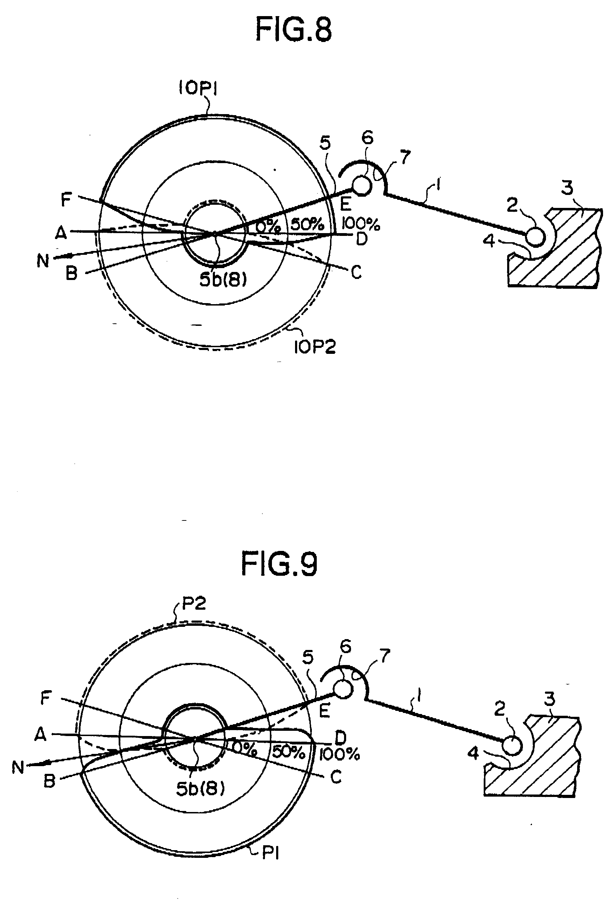

Now, embodiments of the arm mechanism of the present invention, and the method for controlling the arm mechanism will be described with reference to Figs.1, 2 and Figs.3 to 9, respectively.

In Fig.1, the reference numeral 1 represents a first arm, and a horizontal pivot pin 2 at the rear end 1a of the first arm is rotatably supported in a bearing 4 in a fixed base 3 to pivot the first arm. The reference numeral 5 represents a second arm, and a horizontal pivot pin 6 at the rear end 5a of the second arm is rotatably mounted in a bearing 7 formed at the forward end 1b of the first arm 1 to pivot the second arm. The reference numeral 8 represents a working member such as a grab or bucket which is mounted on the loading point 5b of the forward end of the second arm 5, and the above members from the first arm 1 to the loading member 8 constitute a two-joint arm mechanism in which the pivot pins 2 and 6 serve as joints.

In the above two-joint arm mechanism, the arms 1 and 5 are independently rotatable on the pivot pins 2 and 6 in the clockwise-counterclocewise directions by advance-retract movements of an actuator, for example, a hydraulic cylinder 9 span-wise mounted between the middle of the first arm and the base 3 and a hydraulic cylinder 10 span-wise mounted between the forward end of the first arm 1 and the middle of the second arm 5, respectively. As far as the constituting members described above are concerned, the structure is mechanically equivalent to or substantially the same as the conventional two-joint arm mechanism shown in Fig. 10. In the hydraulic cylinders 9 and 10, the reference numerals 9a and 10a represent piston rods, the reference numerals 9b and 10b represent cylinder bodies, the reference numerals 9c and 10c represent pistons, and the reference numerals 9d, 10d, 9e and 10e represent supply-discharge ports, respectively.

As described hereinabove, however, the conventional two-joint arm mechanism is not capable of precisely and rapidly controlling force and stiffness on the loading point 5b at the forward end of the second arm 5 in relation to the base 3.

To cope with this, in the arm mechanism according to the present invention, a hydraulic cylinder 11 is incorporated which serves as a driving means capable of acting simultaneously on both the arms 1 and 5 during rotation (s) of the arm(s) 1 and/or 5, thereby enabling force and stiffness developed at the loading point 5b in relation to the base 3 to be controlled independently of the first and second arms 1 and 5.

In other words, in this embodiment, a hydraulic cylinder 11 is mounted in such a manner that the forward end of a piston rod 11a and the rear end of a connecting rod 11b' so formed as to extend from the rear end of a cylinder body 11b are connected to the second arm 5 in the vicinity of the rear end thereof and the base 3, respectively, thereby controlling pressures of hydraulic fluids supplied to or discharged from hydraulic fluid supply-discharge ports 11d and 11e of the cylinder 11 during rotation(s) of arm(s) 1 and/or 5 against force(s) exerted on the forward and/or rear face(s) due to rotation(s) of the arm(s) 1 and/or 5.

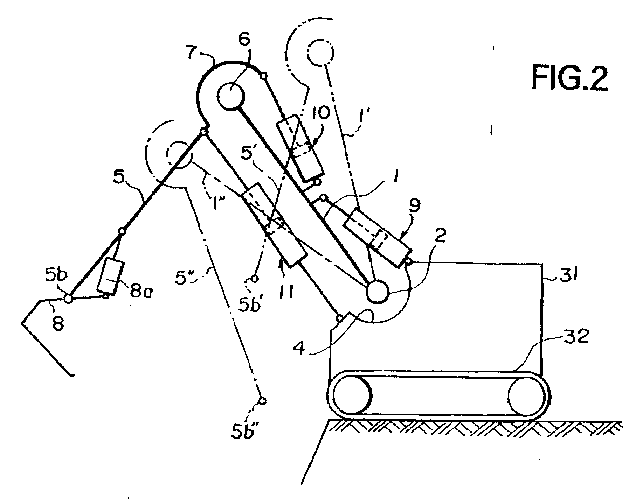

Fig.2 is a conceptional side view of a power shovel to which the two-joint arm mechanism of the present invention in Fig.1 is applied. In the embodiment in Fig.2, a counterpart of the base 3 in Fig.1 is formed in a vehicle body 31 of the power shovel, and the bearing 7 and the pivot pin 6, which are mounted on the first arm 1 and the rear end 5a of the second arm 5 in Fig.1, respectively, are mounted on the converse members (arms 5 and 1). In other structure than this, however, this embodiment is equivalent to the arm mechanism in Fig.1. In Fig.2, the reference numeral 32 represents a crawler and the reference numeral 8a represents a driving means such as a cylinder for changing and retaining posture of a loading member 8.

In Fig.2, when the first arm 1 is rotated in the clockwise direction by the action of the cylinder 9 and the second arm is rotated in the counterclockwise direction by the action of the cylinder 10, the arms 1 and 5 and the loading point 5b are moved to positions of the arms 1' and 5' and a position of the loading point 5b', respectively. The rotation of the first arm 1 in the clockwise direction acts on the cylinder 11 to cause it to stretch, whereas the rotation of the second arm 5 in the counterclockwise direction acts on the cylinder 11 to cause it to retract. On this occasion, by controlling pressures P1 and P2 exerted on the front and the rear of the piston 11c of the cylinder 11, it is possible to selectively render the action of the output force of the cylinder 11 synergetic or antagonistic. Accordingly, it is possible to control position, force and stiffness of the loading point 5b at the forward end of the second arm 5 in relation to the body 31. In Fig.2, reference numerals 1'', 5'' and 5b'' represent positions to which the first arm 1, the second arm 5, the loading point 5b are alternatively moved.

In each of the two-joint arm mechanisms shown in Figs.1 and 2, the first and second armns 1 and 5 are independently rotated by the output forces of the two mono-articular driving means 9 and 10 for the respective arms 1 and 5 to cause the arm mechanism as a whole to flex or extend, while the output force of the single bi-articular driving means capable of acting simultaneously on the arms 1 and 5 is controlled during the flexion or extension movement of the arm mechanism, thereby enabling position, force and stiffness of the loading point 5b at the forward end of the second arm 5 in relation to the base 3 to be controlled independently of the control of rotational forces and stiffnesses of the first arm 1 and the second arm 5.

In the next place, description will be given with respect to the method for controlling each of the driving means in the two-joint arm mechanism equipped with the driving means according to the present invention which acts simultaneously on the two-joints.

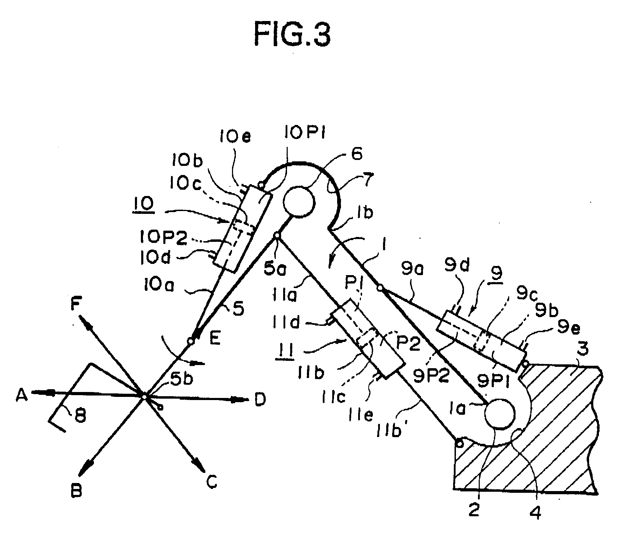

Fig.3 shows directions of movement of the loading point at the forward end 5b of the arm mechanism shown in Fig.1 (the same may apply to that in Fig.2), and the directions of movement are defined as follows.

Direction A-D (first direction): directions shown by arrows on the line connecting the pivot pin 2 of the first arm 1 and the forward end 5b of the second arm 5 are defined as direction A and direction D.

Direction B-E (second direction): directions shown by arrows on the line connecting the pivot pin 6 at the rear end 5a of the second arm 5 and the forward end 5b of the second arm 5 are defined as direction B and direction E.

Direction C-F (third direction): directions shown by arrows on the line passing through the forward end 5b of the second arm 5 and in parallel with the line connecting the pivot pin 2 of the first arm 1 and the rear end 5a of the second arm 5 are defined as direction C and direction F.

Attendantly upon flexion and extension of the arm mechanism in Fig.1 as a whole, angles and positions of the first arm 1 and the second arm 5 change variously. Accordingly, the angles at which direction A-D (first direction), direction B-E (second direction) and direction C-F (third direction) intersect one another variously change according to the flexion and extension of the arm mechanism.

Next, description will be made with respect to the acting directions of driving forces of the cylinders 9, 10 and 11, when the loading point 5b in Fig.3 is caused to move in an arbitrary direction attendantly upon flexion and extension of the arm mechanism as a whole.

Method for driving each of the cylinders 9, 10 and 11 in a case where the forward end of the second arm 5, i.e., the loading point 5b in the arm mechanism is driven in an arbitrary direction at the maximal output force is as follows.

In a case where each of the cylinders 9, 10 and 11 is actuated at an arbitrary output force (100% or lower), driving force of each of the cylinders 9, 10 and 11 is determined according to the ratio of the arbitrary output force to the maximal output force.

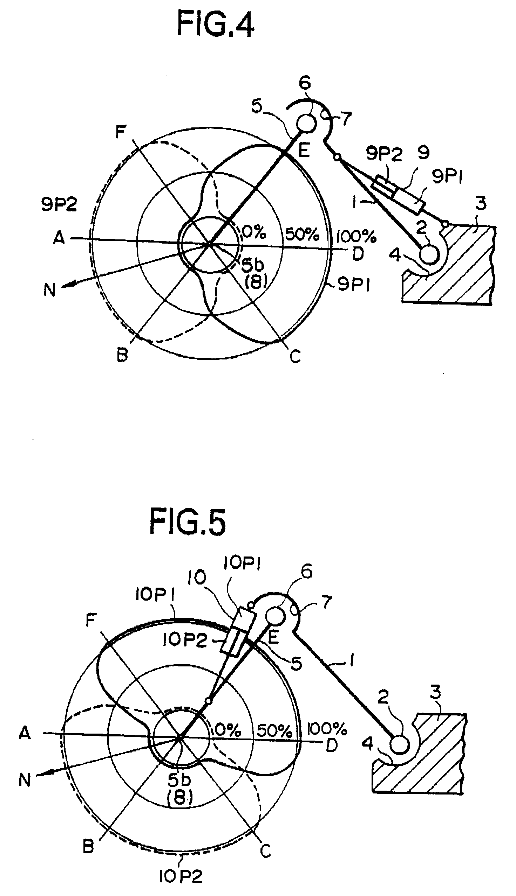

First, there is shown in Fig.4 method for driving the hydraulic cylinder 9 as a first driving means, i.e., mode for exerting pressure 9P1 and pressure 9P2 depending upon the direction in which the loading point 5b' is moved.

With respect to the pressure 9P1, when the loading point 5b moved to direction D in the first direction, the output force is 100% between direction C and direction E in which include direction D, and 0% between direction F and direction B in which include direction A. As shown by the solid line in Fig.4, the output force gradually reduced in an inversed sigmoidal curve from direction C to direction B, and gradually reduced in a sigmoidal curve from direction E to direction F. In this connection, in the present invention, the output reduction pattern described above and the output increase pattern described below are those depicted by protting the outputs on the radial graphs in Figs.4 to 6. Accordingly, if the outputs are protted on a graph of a different type, a different pattern is obtained.

With respect to the pressure 9P2, when the loading point 5b is moved to direction A in the first direction, the output force is 100% between direction F and direction B in which include direction A and 0% between direction C and direction E in which include direction D, as opposed to the pressure 9P1. As shown by the broken line in Fig.4, the output force gradually increased in a sigmoidal curve from direction C to direction B, and gradually increased in an inversed sigmoidal curve from direction E to direction F. Between direction B and direction C, and between direction E and direction F, the sum of the pressure 9P1 and the pressure 9P2 is set to be 100% of the output force of the cylinder 9.

Next, there is shown in Fig.5 method for driving the hydraulic cylinder 10 as a second driving means, i.e., mode for exerting pressure 10P1 and pressure 10P2 depending upon the direction in which the loading point 5b is moved.

With respect to the pressure 10P1, when the loading point 5b is moved to direction E in the second direction, the output force is 100% between direction D and direction F in which include direction E and 0% between direction A and direction C in which include direction B. As shown by the solid line in Fig.5, the pressure gradually reduced in an inversed sigmoidal curve from direction D to direction C, and gradually reduced in a sigmoidal curve from direction F to direction A.

With respect to the pressure 10P2, when the loading point 5b is moved to direction B in the second direction, the pressure is 0% between direction D and direction F in which include direction E and 100% between direction A and direction C in which include direction B, as opposed to the pressure 10P1. As shown by the broken line in Fig.5, the pressure gradually increased in a sigmoidal curve from direction D to direction C, and gradually increased in an inversed sigmoidal curve from direction F to direction A. Between direction C and direction D, and between direction F and direction A, the sum of the pressure 10P1 and the pressure 10P2 is set to be 100% of the output force of the cylinder 10.

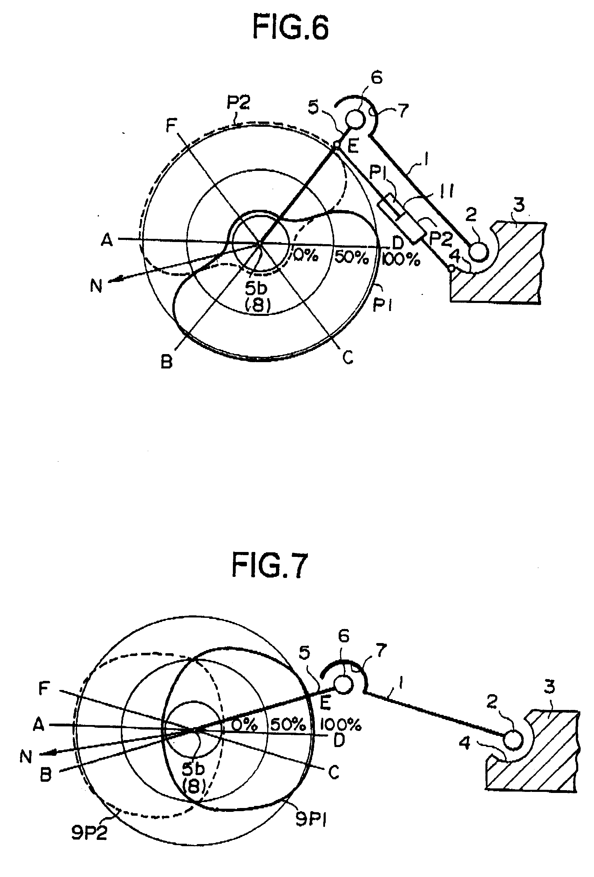

The present invention comprises controlling the driving of the hydraulic cylinder 11 as a third driving means, in parallel with the controlling the driving of the cylinders 9 and 10 in the above described mode. Accordingly, with reference to Fig.6, description will be made on the mode for controlling pressure P1 and pressure P2 depending upon the direction in which the loading point 5b is moved by the actions of the cylinders 9 and 10.

With respect to the pressure P1, when the loading point 5b is moved to direction C in the third direction, the pressure is 100% between direction B and direction D in which include direction C and 0% between direction E and direction A in which include direction F. As shown by the solid line in Fig.6, the pressure gradually reduced in an inversed sigmoidal curve from direction B to direction A, and gradually reduced in a sigmoidal curve from direction D to direction E.

With respect to the pressure P2, when the loading point 5b is moved to direction F in the third direction, the pressure is 0% between direction B and direction D in which include direction C and 100% between direction E and direction A in which include direction F, as opposed to the pressure P1. As shown by the broken line in Fig.6, the pressure gradually increased in a sigmoidal curve from direction B to direction A, and gradually increased in an inversed sigmoidal curve from direction D to direction E. Between direction A and direction B, and between direction D and direction E, the sum of the pressure P1 and the pressure P2 is set to be 100% of the output force of the cylinder 11.

In the above-described mode for controlling the output force of each of the cylinders 9, 10 and 11, directions A-D, B-E and C-F indicating the directions of movement vary according to the flexion and extension of the arm mechanism, and the complementarily varying proportions between the pressures 9P1 and 9P2, 10P1 and 10P2, and P1 and P2 of the respective cylinders 9, 10, and 11 vary in the same proportions as in the changes in the directions of movement, as shown in Figs.7 to 9. For example, as shown in Figs.4 to 9, if the angle formed by direction A and direction B is changed due to flexion or extension of the arm mechanism, the proportions between the pressures P1 and P2 of the cylinder 11 in direction N of movement of the loading point 5b do not change, so long as the proportions of angles between direction A and direction B divided by direction N of an arbitrary movement of the loading point 5b.

The method for driving each of the cylinders 9, 10 and 11 has been derived from the studies in which an upper limb of a human being is considered as a two-joint link mechanism containing a shoulder joint and an elbow joint, and in conjunction with flexion and extention of the upper limb as a whole, analyses are performed on actions of a pair of antagonistic mono-articular muscles responsible for movement of the shoulder joint (which correspond to the pressures 9P1, 9P2 of the cylinder 9), a pair of antagonistic mono-articular muscles responsible for movement of the elbow joint (which correspond to the pressures 10P1, 10P2 of the cylinder 10), and a pair of antagonistic bi-articular muscles extending over the shoulder and elbow joints and responsible simultaneously for the movements of both the joints (which correspond to the pressures P1, P2 of the cylinder 11).

With respect to the actions of muscles of an upper limb of a human being, the present inventors have performed control-engineering simulation analyses with a mechanical link model constructed by them and also performed experimental analyses by means of a mechanical arm robot equipped with pneumatic controlled artificial rubber actuators, and as a result, it has been demonstrated that position, force and stiffness on the forward end 5b of the second arm 5 of the two-joint arm mechanism, i.e., the loading point 5b of the arm mechanism can be controlled independently.

The method of the present invention utilizes a driving method substantially in the same mode as in the shoulder and elbow joints of a human being for controlling each of the driving means of the two-joint arm mechanism equipped with the driving means acting simultaneously on the two-joints, i.e., the third bi-articular driving means which has not been incorporated in a conventional machine, robot or the like and is apparently redundant, thereby enabling movement of the loading point 5b at the forward end of the second arm 5 of the two-joint arm mechanism which is as smooth, rapid and precise as that of a human being to be realized.

The present invention is constructed as described above, and accordingly, it comprises, in the two-joint arm mechanism, the two driving means which impart rotational forces independently to the arms, and the single driving means which imparts other forces exhibiting influence on the rotations of the arms caused by the output forces of the two driving means to both the arms simultaneously and which is extended over both the arms to move the loading point mounted on the forward end of the second arm to-and-fro, and the driving means are adapted to be drive-controlled simultaneously. Accordingly, there is attained a significant effect that force and stiffness of the loading point on the forward end of the second arm can be controlled independently of the first and second arms for moving and positioning the loading member relative to the fixed system such as a base. Such an effect has not been attained by a conventional two-joint arm mechanism.

Further, the drive-controlling method of the present invention is effectively applied to a robot, a manipulator, an arm of a power shovel or the like which requires stiffness control, as well as exhibits its effect when applied to an operating arm of a space robot, submarine search robot or the like, in particular, to an arm mechanism which is required to move smoothly, rapidly and precisely, such as an arm for operation in space.

## Claims

1. A two-joint arm mechanism equipped with a bi-articular driving means, the two-joint arm mechanism comprising:
a first arm (1) pivoted at its rear end on a base (3) as a foundation,
a second arm (5) pivoted at its rear end on the forward end of the first arm (1), and
a loading member (8) mounted on the forward end of the second arm (5),
wherein two mono-articular driving means (9, 10) are respectively connected to the first arm (1) and the second arm (5) for independently exerting rotational forces on the respective arms (1, 5) in order to independently rotate the first arm (1) and the second arm (5) on pivot pins (2, 6) thereof to cause extension movement or flexion movement of the arm mechanism, characterized in that a single bi-articular driving means (11) capable of acting simultaneously on both the arms (1, 5) is connectively mounted between the base (3) and the second arm (5), and by simultaneously actuating these driving means (9, 10, 11), both the arms (1, 5) are rotated to move the loading point (5b) at the forward end of the second arm (5) forward or backward relative to the base (3) to effect positioning of the loading point (5b) at the forward end of the second arm (5).

2. A method for controlling a two-joint arm mechanism equipped with a bi-articular driving means, the two-joint arm mechanism comprising:
a first arm (1) pivoted at its rear end on a base (3) as a foundation,
a second arm (5) pivoted at its rear end on the forward end of the first arm (1), and
a loading member (8) mounted on the forward end of the second arm (5),
wherein a first mono-articular driving means (9) and a second mono-articular driving means (10) are respectively connected to the first arm (1) and the second arm (5) for independently exerting driving forces for independently rotating the first arm (1) and the second arm (5) on pivot pins (2, 6) thereof, characterized in that a third bi-articular driving means (11) capable of acting simultaneously on both the arms (1, 5) is connectively mounted between the base (3) and the second arm (5), and by simultaneously actuating these driving means (9, 10, 11), both the arms are rotated to move the loading point (5b) at the forward end of the second arm (5) forward or backward relative to the base (3) to effect positioning of the loading point (5b) at the forward end of the second arm (5); the method comprising:
dividing area of the movement of the loading point (5b) into direction A-D as a first direction on the line connecting the pivot pin (2) at the rear end of the first arm (1) and the forward end of the second arm (5), direction B-E as a second direction on the line passing along the second arm (5), and direction C-F as a third direction on the line passing through the loading point (5b) and in parallel with the first arm (1),
controlling the first driving means (9) in such a manner that when the loading point (5b) is moved forward or backward in the range included by direction B-E and direction C-F and containing the first direction, the first driving means (9) is actuated at an output force of 100% in the direction of the movement, and when the loading point (5b) is moved forward or backward in the range included by direction B-E and direction C-F and without the first direction, the output force of the first driving means (9) in the direction of the forward or backward movement of the loading point is gradually reduced to 0%, and sum of the gradually reduced output forces in the directions of the forward and backward movements is set to be 100%,
controlling the second driving means (10) in such a manner that when the loading point (5b) is moved forward or backward in the range included by direction A-Dand direction C-F and containing the second direction, the second driving means (10) is actuated at a output force of 100% in the direction of the movement, and when the loading point (5b) is moved forward or backward in the range included by direction A-D and direction C-F and without the second direction, the output force of the second driving means (10) in the direction of the forward or backward movement of the loading point (5b) is gradually reduced to 0%, and sum of the gradually reduced output forces in the directions of the forward and backward movements is set to be 100%, and
controlling the third driving means (11) in such a manner that when the loading point (5b) is moved forward or backward in the range included by direction A-D and direction B-E and containing the third direction, the third driving means (11) is actuated at an output force of 100% in the direction of the movement, and when the loading point is moved forward or backward in the range included by direction A-D and direction B-E and without the second direction, the output force of the third driving means (11) in the direction of the forward or backward movement of the loading point (5b) is gradually reduced to 0%, and sum of the guradually reduced output forces in the directions of the forward and backward movements is set to be 100%.

## Patentansprüche

1. Zweigelenkiger Armmechanismus mit einer in zwei Richtungen arbeitenden Antriebseinrichtung, wobei der zweigelenkige Armmechanismus folgendes umfaßt:
einen ersten Arm (1), der an seinem hinteren Ende auf einer Basis (3) als Fundament drehbar gelagert ist,
einen zweiten Arm (5), der an seinem hinteren Ende auf dem vorderen Ende des ersten Arms (1) drehbar gelagert ist, und
ein Belastungselement (8), das an dem vorderen Ende des zweiten Arms (5) befestigt ist,
wobei zwei in eine Richtung arbeitende Antriebseinrichtungen (9, 10) mit dem ersten Arm (1) bzw. mit dem zweiten Arm (5) verbunden sind, um unabhängig voneinander Drehkräfte auf den jeweiligen Arm (1, 5) auszuüben, um unabhängig voneinander den ersten Arm (1) und den zweiten Arm (5) auf deren Drehzapfen (2, 6) zu drehen, um eine Streck- oder Beugebewegung des Armmechanismus herbeizuführen, dadurch gekennzeichnet, daß eine einzelne, in zwei Richtungen arbeitende Antriebseinrichtung (11), die gleichzeitig auf beide Arme (1, 5) einwirken kann, zwischen die Basis (3) und den zweiten Arm (5) eingesetzt ist, und daß durch gleichzeitiges Betätigen dieser Antriebseinrichtungen (9, 10, 11) beide Arme (1, 5) gedreht werden, um den Belastungspunkt (5b) am vorderen Ende des zweiten Arms (5) in bezug zur Basis (3) vorwärts oder rückwärts zu bewegen, damit der Belastungspunkt (5b) am vorderen Ende des zweiten Arms (5) positioniert wird.

2. Verfahren zum Steuern eines zweigelenkigen Armmechanismus mit einer in zwei Richtungen arbeitenden Antriebseinrichtung, wobei der zweigelenkige Armmechanismus folgendes umfaßt:
einen ersten Arm (1), der an seinem hinteren Ende auf einer Basis (3) als Fundament drehbar gelagert ist,
einen zweiten Arm (5), der an seinem hinteren Ende auf dem vorderen Ende des ersten Arms (1) drehbar gelagert ist, und
ein Belastungselement (8), das am vorderen Ende des zweiten Arms (5) befestigt ist,
wobei eine erste, in eine Richtung arbeitende Antriebseinrichtung (9) und eine zweite, in eine Richtung arbeitende Antriebseinrichtung (10) mit dem ersten Arm (1) bzw. mit dem zweiten Arm (5) verbunden sind, um unabhängig voneinander Antriebskräfte auszuüben, um unabhängig voneinander den ersten Arm (1) und den zweiten Arm (5) auf deren Drehzapfen (2, 6) zu drehen, dadurch gekennzeichnet, daß eine dritte in zwei Richtungen arbeitende Antriebseinrichtung (11), die in der Lage ist, gleichzeitig auf beide Arme (1, 5) einzuwirken, zwischen der Basis (3) und dem zweiten Arm (5) eingesetzt ist, und daß durch gleichzeitige Betätigung dieser Antriebseinrichtungen (9, 10, 11) die beiden Arme (1, 5) gedreht werden, um den Belastungspunkt (5b) am vorderen Ende des zweiten Arms (5) in bezug auf die Basis (3) vorwärts oder rückwärts zu bewegen, damit der Belastungspunkt (5b) am vorderen Ende des zweiten Arms (5) positioniert wird; wobei das Verfahren folgende Schritte umfaßt:
Unterteilen des Bewegungsbereichs des Belastungspunktes (5b) in die Richtung A-D als erste Richtung auf der Linie, die den Drehzapfen (2) am hinteren Ende des ersten Arms (1) und das vordere Ende des zweiten Arms (5) verbindet, in die Richtung B-E als zweite Richtung auf der Linie, die entlang des zweiten Arms (5) verläuft, und in die Richtung C-F als dritte Richtung auf der Linie, die durch den Belastungspunkt (5b) und parallel zu dem ersten Arm (1) verläuft,
Steuern der ersten Antriebseinrichtung (9) in der Weise, daß dann, wenn der Belastungspunkt (5b) in dem Bereich vorwärts oder rückwärts bewegt wird, der von der Richtung B-E und der Richtung C-F eingeschlossen wird und die erste Richtung enthält, die erste Antriebseinrichtung (9) mit einer Ausgangsleistung von 100 % in Bewegungsrichtung betätigt wird, und dann, wenn der Belastungspunkt (5b) in dem Bereich vorwärts oder rückwärts bewegt wird, der von der Richtung B-E und der Richtung C-F eingeschlossen wird und die erste Richtung nicht enthält, die Ausgangsleistung der ersten Antriebseinrichtung (9) in Richtung der Vorwärts- oder Rückwärtsbewegung des Belastungspunkts allmählich auf 0 % verringert wird, und die Summe der allmählich verringerten Ausgangsleistungen in Richtung der Vorwärts- und Rückwärtsbewegung auf 100 % eingestellt wird,
Steuern der zweiten Antriebseinrichtung (10) in der Weise, daß dann, wenn der Belastungspunkt (5b) in dem Bereich vorwärts oder rückwärts bewegt wird, der von der Richtung A-D und der Richtung C-F eingeschlossen wird und die zweite Richtung enthält, die zweite Antriebseinrichtung (10) mit einer Ausgangsleistung von 100 % in Bewegungsrichtung betätigt wird, und dann, wenn der Belastungspunkt (5b) in dem Bereich vorwärts oder rückwärtsbewegt wird, der von der Richtung A-D und der Richtung C-F eingeschlossen wird und die zweite Richtung nicht enthält, die Ausgangsleistung der zweiten Antriebseinrichtung (10) in Richtung der Vorwärts- oder Rückwärtsbewegung des Belastungspunktes (5b) allmählich auf 0 % verringert wird, und die Summe der allmählich verringerten Ausgangsleistungen in Richtung der Vorwärts- und Rückwärtsbewegung auf 100 % eingestellt wird, und
Steuern der dritten Antriebseinrichtung (11) in der Weise, daß dann, wenn der Belastungspunkt (5b) in dem Bereich vorwärts oder rückwärts bewegt wird, der von der Richtung A-D und der Richtung B-E eingeschlossen wird und die dritte Richtung enthält, die dritte Antriebseinrichtung (11) mit einer Ausgangsleistung von 100 % in Bewegungsrichtung betätigt wird, und dann, wenn der Belastungspunkt in dem Bereich vorwärts oder rückwärts bewegt wird, der von der Richtung A-D und der Richtung B-E eingeschlossen wird und die zweite Richtung nicht enthält, die Ausgangsleistung der dritten Antriebseinrichtung (11) in Richtung der Vorwärts- oder Rückwärtsbewegung des Belastungspunktes (5b) allmählich auf 0 % verringert wird, und die Summe der allmählich verringerten Ausgangsleistungen in Richtung der Vorwärts- und Rückwärtsbewegung auf 100 % eingestellt wird.

## Revendications

1. Mécanisme de bras à deux joints équipé d'un moyen d'entraînement dans deux sens, le mécanisme de bras à deux joints comprenant :
un premier bras (1) articulé à son extrémité arrière sur une base (3) comme socle,
un deuxième bras (5) articulé à son extrémité arrière sur l'extrémité avant du premier bras (1) et,
un élément de chargement (8) installé à l'extrémité avant du deuxième bras (5),
où deux moyens d'entaînement (9, 10) dans un sens sont respectivement reliés au premier bras (1) et au deuxième bras (5) pour exercer indépendamment des forces de rotation sur les bras respectifs (1,5) pour faire tourner indépendamment le premier bras (1) et le deuxième bras (5) sur des pivots (2,6) de ceux-ci pour provoquer un mouvement d'extension ou un mouvement de fléxion du mécanisme de bras, caractérisé en ce qu'un seul moyen d'entraînement dans deux sens (11) apte à agir simultanément sur les deux bras (1,5) est installé en établissant une connexion entre la base (3) et le deuxième bras (5) et en actionnant simultanément ces moyens d'entraînement (9, 10, 11), les deux bras (1, 5) étant amenés à tourner pour déplacer le point de chargement (5b) à l'extrémité avant du deuxième bras (5) vers l'avant ou vers l'arrière relativement à la base (3) pour procéder à un positionnement du point de chargement (5b) à l'extrémité avant du deuxième bras (5).

2. Procédé pour commander un mécanisme de bras à deux joints équipé d'un moyen d'entraînement dans deux sens, le mécanisme de bras à deux joints comprenant :
un premier bras (1) articulé à son extrémité arrière sur une base (3) comme socle,
un deuxième bras (5) articulé à son extrémité arrière sur l'extrémité avant du premier bras (1) et
un élément de chargement (8) monté sur l'extrémité avant du deuxième bras (5),
où un premier moyen d'entraînement dans un sens (9) et un deuxième moyen d'entraînement dans un sens (10) sont respectivement reliés au premier bras(1) et au deuxième bras (5) pour exercer indépendamment des forces d'entraînement pour faire tourner indépendamment le premier bras (1) et le deuxième bras (5) sur des pivots (2, 6) de ceux-ci,
caractérisé en ce
qu'un troisième moyen d'entraînement dans deux sens (11) apte à agir simultanément sur les deux bras (1, 5) est installé, en établissant une connexion, entre la base (3) et le deuxième bras (5), et en actionnant simultanément ces moyens d'entraînement (9, 10, 11), les deux bras (1, 5) sont amenés à tourner pour déplacer le point de chargement (5b) à l'extrémité avant du deuxième bras (5) vers l'avant ou vers l'arrière relativement à la base (3) pour procéder au positionnement du point de chargement (5b) à l'extrémité avant du deuxième bras (5), le procédé comprenant les étapes consistant à :
diviser la zone du déplacement du point de chargement (5b) en direction A-D comme première direction sur la ligne relient le pivot (2) à l'extrémité arrière du premier bras (1) et à l'extrémité avant du deuxième bras (5), en direction B-E comme deuxième direction sur la ligne passant le long du deuxième bras (5) et en direction C-F comme troisième direction sur la ligne passant à travers le point de chargement (5b) et parallèlement au premier bras (1),
commander le premier moyen d'entraînement (9) de manière que lorsque le point de chargement (5b) est déplacé vers l'avant ou vers l'arrière dans la plage incluse par la direction B-E et le direction C-F et contenant la première direction, le premier moyen d'entraînement (9) est actionné à une force de sortie de 100 % dans la direction du déplacement, et lorsque le point de chargement (5b) est déplacé vers l'avant ou vers l'arrière dans la plage incluse par la direction B-E et la direction C-F et sans la première direction, la force de sortie du premier moyen d'entraînement (9) dans la direction du déplacement vers l'avant ou vers l'arrière du point de chargement est progressivement diminuée à 0 %, et la somme des forces de sortie diminuée progressivement dans les directions des déplacements vers l'avant et vers l'arrière est réglée pour être de 100 %, et
commander le deuxième moyen d'entraînement (10) de manière que lorsque le point de chargement (5b) est déplacé vers l'avant ou vers l'arrière dans la plage incluse par la direction A-D et la direction C-F et contenant la deuxième direction, le deuxième moyen d'entraînement (10) est actionné à une force de sortie de 100 % dans la direction de déplacement, et lorsque le point de chargement (5b) est déplacé vers l'avant ou vers l'arrière dans la plage incluse par la direction A-D et la direction C-F et sans la deuxième direction, la force de sortie du deuxième moyen d'entraînement (10) dans la direction du déplacement vers l'avant ou vers l'arrière du point de chargement (5b) est progressivement diminuée à 0 %, et la somme des forces de sortie progressivement diminuées dans les directions des déplacements vers l'avant et vers l'arrière est réglée pour être de 100 %, et
commander le troisième moyen d'entraînement (11) de telle manière que lorsque le point de chargement (5b) est déplacé vers l'avant ou vers l'arrière dans la plage incluse par la direction A-D et la direction B-E et contenant la troisième direction, le troisième moyen d'entraînement (11) est actionné à une force de sortie de 100 % dans la direction de déplacement, et lorsque le point de chargement est déplacé vers l'avant ou vers l'arrière dans la plage incluse par la direction A-D et la direction B-E et sans la deuxième direction, la force de sortie du troisième moyen d'entraînement (11) dans la direction du déplacement vers l'avant ou vers l'arrière du point de chargement (5b) est progressivement diminuée à 0 %, et la somme des forces de sortie progressivement réduites dans les directions des déplacements vers l'avant et vers l'artière est réglée pour être de 100 %.
